# FASCICULE DE BREVET EUROPEEN

(11) **EP 2 969 693 B1**
(45) Date de publication et mention de la délivrance du brevet: **05.06.2019**
(21) Numéro de dépôt: 14715348.0
(22) Date de dépôt: 10.03.2014
(51) Int. Cl.: B60W 30/20, B60W 10/06

(54) **PROCEDE DE DESACTIVATION D'UNE FONCTION D'AGREMENT CURATIF POUR UNE MOTORISATION D'UN VEHICULE**
VERFAHREN ZUR DEAKTIVIERUNG EINER KURATIVEN FAHRFÄHIGKEITSFUNKTION BEI EINEM FAHRZEUGANTRIEBSSTRANG
METHOD FOR DEACTIVATING A CURATIVE DRIVEABLITY FUNCTION IN A VEHICLE DRIVELINE

(30) Priorité: 13.03.2013 FR 1352224
(43) Date de publication de la demande: 20.01.2016
(73) Titulaire: PSA Automobiles SA, 78300 Poissy (FR)
(72) Inventeur: CHARLES, Juliette, F-78510 Triel sur Seine (FR); THOMAS, Mathieu, F-78220 Viroflay (FR)
(86) Numéro de dépôt international: PCT/FR2014/050533
(87) Numéro de publication internationale: WO 2014/140464

(56) Documents cités:
- DE-A1- 19 949 449
- DE-A1-102010 029 937
- FR-A1- 2 736 010
- FR-A1- 2 920 901

## Description

La présente invention concerne un procédé de désactivation d'une fonction d'agrément curatif qui agit sur la commande d'une motorisation d'un véhicule automobile, ainsi qu'un véhicule automobile comportant des moyens mettant en oeuvre un tel procédé de désactivation.

Les véhicules automobiles comportent généralement un calculateur de contrôle du moteur thermique, qui reçoit des informations du conducteur, en particulier les mouvements de la pédale d'accélérateur, afin d'établir une consigne de couple appliquée au moteur qui répond à la demande du conducteur.

Le groupe motopropulseur du véhicule comporte une transmission reliée au moteur thermique, qui peut être en particulier du type boîte de vitesses manuelle « BVM », boîte de vitesses automatisée « BVMP », boîte automatique « BA » ou boîte à double embrayage « DCT ».

Le moteur thermique comprenant la transmission qui est généralement fixée dessus, forme un ensemble relié à la caisse du véhicule par des supports élastiques qui permettent de filtrer les vibrations émises par ce moteur pour éviter de les transmettre à la caisse. On isole ainsi le moteur thermique pour ne pas générer des vibrations et des bruits dans la caisse du véhicule, sources de désagréments.

Toutefois dans le cas d'un changement rapide de consigne de couple, par exemple si le conducteur relâche brutalement la pédale d'accélérateur, on obtient un passage d'un couple moteur positif qui tracte le véhicule, à un couple négatif qui freine ce véhicule.

Cette inversion de couple met en oeuvre l'ensemble des jeux dans la chaîne cinématique, comportant les jeux mécaniques des organes de transmission, qui s'additionne à différents mouvements de torsion ou de flexion des composants subissant des contraintes, en particulier les supports élastiques du groupe motopropulseur.

On obtient un couple de bascule du groupe motopropulseur sur les supports élastiques, ce groupe se déplaçant pour venir se caler sur ses supports dans l'autre sens d'une manière qui peut être brutale, en générant un choc. De plus le mouvement de bascule du groupe motopropulseur se conjugue généralement avec des oscillations de vitesse du moteur thermique, ce qui cause des désagréments.

On peut obtenir en particulier de tels mouvements lors des passages de vitesse d'une boîte de vitesses manuelle commandée par le conducteur, ou d'une boîte de vitesses automatisée comportant une rupture du couple de traction, commandée par le système de contrôle de cette transmission.

Pour éviter un tel choc, il est connu d'utiliser une fonction d'agrément préventif qui réalise un filtrage du couple de consigne correspondant à la demande du conducteur, permettant en particulier lors d'un lâcher brutal de la pédale d'accélérateur, de passer les jeux de bascule du groupe motopropulseur en limitant au maximum les à-coups de la chaîne de traction.

Il est connu aussi, par exemple des documents FR-A-2 920 901, FR-A-2 736 010 et DE 10 2010 029 937 A, d'utiliser une fonction d'agrément curatif qui prend en compte les oscillations de vitesse du moteur thermique, pour générer une demande de couple correctif délivrée à ce moteur, en opposition de phase avec ses oscillations propres, afin de chercher à les atténuer pour limiter les désagréments.

Toutefois lorsque la demande de mise en oeuvre de la fonction d'agrément curatif se termine, on a alors une chute du couple correctif qui retourne brutalement à zéro, ce qui peut engendrer un saut de couple causant des désagréments.

La présente invention a notamment pour but d'éviter ces inconvénients de la technique antérieure.

Elle propose à cet effet un procédé de désactivation d'une fonction d'agrément curatif qui agit sur la commande d'une motorisation d'un véhicule automobile, cette fonction limitant lors d'un changement rapide de consigne de couple du moteur, les oscillations de vitesse du moteur en générant un couple correctif s'additionnant à cette consigne de couple, caractérisé en ce que lors d'une demande de désactivation de la fonction d'agrément curatif, il établit un facteur de décrément décroissant de un à zéro, puis il le multiplie par le couple correctif théorique nécessaire qui continue à être calculé normalement par cette fonction, pour obtenir le couple correctif final qui est additionné à la consigne de couple.

Un avantage de ce procédé de désactivation est que l'on obtient un couple correctif final comprenant une décroissance progressive, qui s'annule de manière non brutale, ce couple correctif final restant de plus obligatoirement en phase avec le couple correctif souhaitable, car obtenu par une multiplication du couple correctif théorique par le facteur de décrément, ce qui permet de respecter les fréquences propres de la chaîne de traction et d'éviter des amplifications à ces fréquences.

Le procédé de désactivation d'une fonction d'agrément curatif selon l'invention, peut en outre comporter une ou plusieurs des caractéristiques suivantes, qui peuvent être combinées entre elles.

Avantageusement, une valeur de temps est associée au facteur de décrément, qui représente la durée totale de passage de ce facteur de la valeur un à la valeur zéro, cette valeur étant calibrée notamment en fonction de la vitesse du moteur thermique, et du rapport de la transmission du moteur qui est engagé.

Avantageusement, la fonction d'agrément curatif est calibrée suivant la durée d'un cycle moteur.

Avantageusement, on divise la valeur de temps par la durée d'un cycle moteur, pour obtenir le nombre de cycles moteur X permettant le passage du facteur de décrément de un à zéro, ce facteur étant alors calculé pour chaque cycle moteur suivant la désactivation, en retranchant 1/X à sa valeur précédente.

L'invention a aussi pour objet un véhicule automobile comportant un système de contrôle de la motorisation mettant en oeuvre une fonction d'agrément curatif qui limite lors d'un changement rapide de consigne de couple du moteur, les oscillations de vitesse du moteur en générant un couple correctif s'additionnant à cette consigne de couple, ce véhicule comportant des moyens mettant en oeuvre un procédé de désactivation de cette fonction d'agrément curatif, comprenant l'une quelconque des caractéristiques précédentes.

Avantageusement, le véhicule comporte des moyens mettant en oeuvre une fonction d'agrément préventif qui filtre une consigne de couple afin de gérer les jeux dans la transmission et les basculements du groupe motopropulseur, cette fonction calculant un couple indiqué après prise en compte du couple de pertes moteur, qui est délivré à la fonction d'agrément curatif.

Avantageusement, le procédé de désactivation de la fonction d'agrément curatif est mis en oeuvre par un calculateur de contrôle de la motorisation.

L'invention sera mieux comprise et d'autres caractéristiques et avantages apparaîtront plus clairement à la lecture de la description ci-après, donnée à titre d'exemple et de manière non limitative en référence aux dessins annexés dans lesquels :
- la figure 1 est un graphique présentant en fonction du temps, une désactivation d'une fonction d'agrément curatif avec un procédé selon l'art antérieur ;
- la figure 2 est un schéma présentant le calcul du couple de consigne du moteur thermique, avec un procédé de désactivation selon l'invention ; et
- la figure 3 est un graphique présentant en fonction du temps, une désactivation d'une fonction d'agrément curatif avec un procédé selon l'invention.

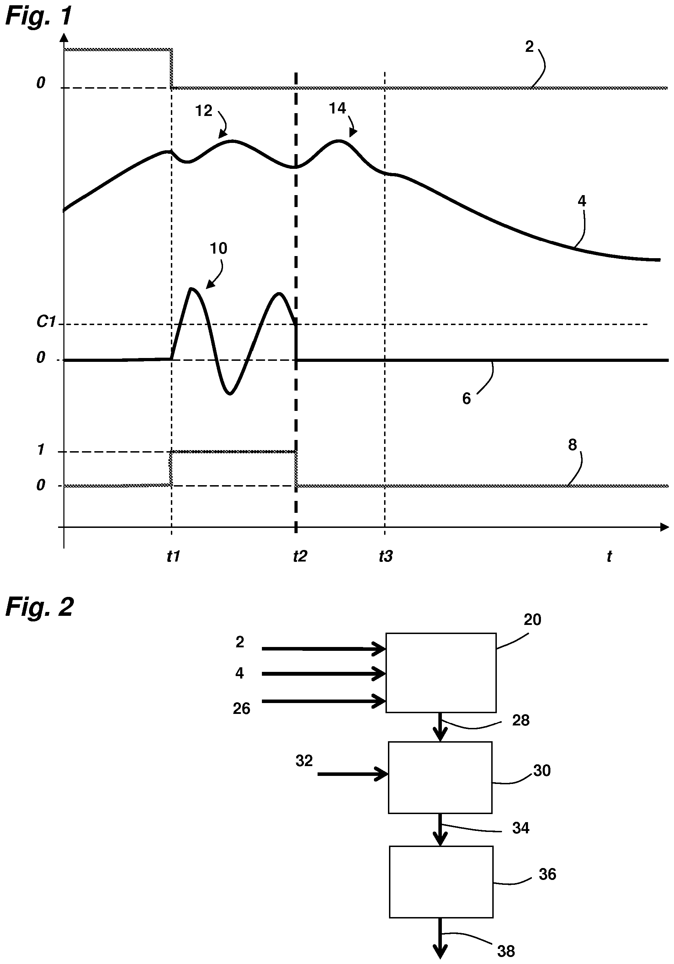

La figure 1 présente successivement en partant de la partie supérieure du graphique, en fonction du temps t, la demande en couple du conducteur 2 exprimée par la position de la pédale d'accélérateur, la vitesse du moteur thermique 4, la valeur du couple correctif de la fonction d'agrément curatif 6, et le signal d'activation de cette fonction d'agrément curatif 8.

Au temps t1 le conducteur relâche brutalement la pédale d'accélérateur, la demande en couple 2 passe instantanément à la valeur zéro. On a à ce même moment une montée au niveau 1 du signal d'activation de la fonction d'agrément curatif 8, qui devient pleinement active.

La chute brutale de couple délivré par le moteur thermique provoque une inversion du couple qui freine le véhicule au lieu de le tracter, et un basculement du groupe motopropulseur sur ses supports élastiques. La décélération brutale demandée au moteur thermique ainsi que son basculement entraînent des oscillations 12 de la vitesse de ce moteur 4.

La fonction d'agrément curatif analyse les oscillations 12 de la vitesse du moteur 4, et calcule un couple correctif 6 qui s'ajoute à celui normalement demandé à ce moteur, afin de contrer ces oscillations. En particulier, le couple correctif 6 comporte des oscillations de couple qui sont en opposition de phase avec celles 12 de la vitesse du moteur 4, afin de s'opposer en temps réel aux variations de vitesse.

Au temps t2 correspondant à un niveau d'oscillation de la vitesse du moteur 4 suffisamment réduit, on a alors un retour à zéro du signal d'activation de la fonction d'agrément curatif 8, et un arrêt brutal du couple correctif 6 qui passe instantanément à une valeur nulle. Dans cet exemple, le couple correctif 6 comporte au temps t2 un saut qui passe de 20 à 0Nm.

On constate alors que ce saut de couple de commande du moteur thermique lié à la désactivation de la fonction d'agrément curatif, génère un à-coup 14 dans la vitesse de ce moteur 4, qui peut être fortement ressenti par les passagers du véhicule.

On pourrait en complément réaliser une désactivation progressive de la fonction d'agrément curatif, avec par exemple une décroissance linéaire du couple correctif 6, ou un filtrage d'ordre un sur ce couple correctif, mais on risque alors d'obtenir un couple correctif venant en opposition de phase par rapport aux besoins. La correction ne respecterait pas la fréquence propre de la chaîne de traction, et pourrait donner un résultat pire comportant un confort détérioré.

Par ailleurs, la fonction d'agrément curatif peut être activée dans d'autres cas de fonctionnement, même avec une demande de couple par le conducteur qui reste sensiblement constante, afin d'éviter certaines vibrations et d'améliorer le confort. La désactivation de cette fonction d'agrément curatif peut aussi être ressentie par les passagers dans ces cas de roulage.

La figure 2 présente une fonction d'interprétation de la volonté du conducteur 20, qui reçoit en particulier l'information sur la demande en couple du conducteur 2 exprimée par la position de la pédale d'accélérateur, l'information sur la vitesse du moteur 4 et une information sur le rapport de la boîte de vitesses qui est sélectionné 26.

A partir de ces différentes informations, la fonction d'interprétation de la volonté du conducteur 20 établit une consigne de couple du moteur thermique 28 permettant de répondre à la demande du conducteur, qui est délivrée à une fonction d'agrément préventif 30.

La fonction d'agrément préventif 30 filtre la consigne de couple 28 afin de gérer les jeux dans la transmission et les basculements du groupe motopropulseur, de manière à donner le moins d'à-coups possible dans cette transmission, et de respecter le typage du véhicule qui est souhaité. En effet un certain typage du véhicule est demandé afin de délivrer au conducteur certaines sensations comme un confort plus important avec un haut niveau de filtration, ou une sportivité plus prononcée avec un niveau plus faible.

On obtient un couple après agrément préventif, qui est additionné à un couple des pertes du moteur 32 qui prend en compte notamment les frottements internes du moteur, ainsi que les pertes liées aux accessoires entraînés par ce moteur, comme l'alternateur, afin de calculer un couple indiqué 34 qui est délivré à une fonction d'agrément curatif 36.

Quand elle est activée, la fonction d'agrément curatif 36 surveille l'évolution de la vitesse du moteur thermique, afin de calculer le couple correctif 6 qui est ajouté au couple indiqué 34. On obtient un couple final 38 qui est demandé aux organes de commande du moteur thermique, pour ajuster notamment la quantité de carburant injectée dans ce moteur.

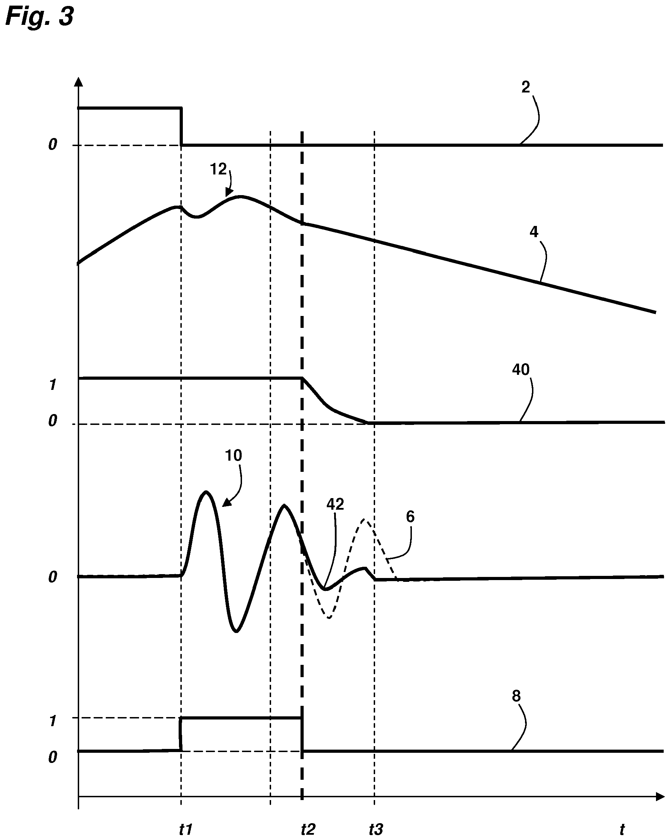

La figure 3 présente un graphique similaire à celui présenté figure 1, comportant en plus un facteur de décrément 40 qui est normalement au niveau 1 avant l'activation de la fonction d'agrément curatif au temps t1, et pendant toute la durée de cette activation jusqu'au temps t2.

Quand le signal d'activation de la fonction d'agrément curatif 8 descend brutalement à zéro, alors le facteur de décrément 40 commence une décroissance continue pour arriver progressivement à zéro au temps t3. Le couple correctif théorique 6 normalement calculé par la fonction d'agrément curatif 36 qui continue ce calcul, est alors multiplié par le facteur de décrément 40 pour obtenir le couple correctif final 42 qui est ajouté au couple indiqué 34.

On obtient ainsi un couple final 38 de commande du moteur thermique qui peut décroître rapidement, tout en restant obligatoirement en phase avec le couple correctif théorique 6 normalement calculé, ce qui évite des problèmes d'opposition de phase qui pourraient entraîner des forts à-coups.

La mise au point du facteur de décrément 40 peut être faite facilement en l'assimilant à une valeur de temps, exprimée par exemple en millisecondes, qui est la durée totale de passage de ce facteur de la valeur un à la valeur zéro.

La valeur de temps du facteur de décrément 40 est calibrée notamment en fonction de la vitesse du moteur thermique 4, et du rapport de boîte de vitesses 26 qui est engagé. La fonction d'agrément curatif étant une fonction synchronisée sur la durée d'un cycle moteur, sa calibration est aussi dimensionnée suivant la période d'un cycle moteur.

Pour une valeur de temps du facteur de décrément 40 choisie par le metteur au point, on divise cette valeur de temps par la durée d'un cycle moteur, pour obtenir le nombre de cycles moteur X permettant le passage de ce facteur de un à zéro. Le facteur de décrément 40 est alors calculé pour chaque cycle moteur pendant la désactivation, en retranchant 1/X à sa valeur précédente.

Par exemple pour une période de cycle moteur de 10ms et un facteur de décrément de 30ms, on obtient un nombre de cycles moteur X = 3. Le facteur de décrément appelé par la fonction d'agrément curatif à chaque période, est à chaque fois diminué de 1/X = 1/3. On obtient alors un facteur de décrément égal à 2/3 pour le premier cycle moteur, 1/3 pour le deuxième et 0 pour le troisième.

Le facteur de décrément donne alors une atténuation du couple correctif qui n'est pas linéaire, mais qui dépend directement des oscillations de vitesse du moteur. Le couple final 38 demandé au moteur thermique ne présente alors pas de saut de couple à la fin de l'action de l'agrément curatif, ce qui évite des à-coups et des oscillations du régime moteur, qui pouvaient être signalés par les clients dans des enquêtes de satisfaction.

On notera qu'on ne modifie pas les performances de la fonction d'agrément curatif, qui pendant sa durée d'activation comporte un fonctionnement identique à celui habituellement prévu.

Le procédé de désactivation de la fonction d'agrément curatif est avantageusement mis en oeuvre par un calculateur existant de contrôle du moteur thermique, il nécessite seulement des compléments de logiciels, et peut être installé sans coût de production supplémentaire.

## Revendications

1. Procédé de désactivation d'une fonction d'agrément curatif (36) qui agit sur la commande d'une motorisation d'un véhicule automobile, cette fonction limitant lors d'un changement rapide de consigne de couple du moteur (28), les oscillations de vitesse du moteur (12) en générant un couple correctif s'additionnant à cette consigne de couple, **caractérisé en ce que** lors d'une demande de désactivation de la fonction d'agrément curatif (36), il établit un facteur de décrément (40) décroissant de un à zéro, puis il le multiplie par le couple correctif théorique nécessaire qui continue à être calculé normalement par cette fonction, pour obtenir le couple correctif final (42) qui est additionné à la consigne de couple (34).

2. Procédé de désactivation selon la revendication 1, **caractérisé en ce qu'**une valeur de temps est associée au facteur de décrément (40), qui représente la durée totale de passage de ce facteur de la valeur un à la valeur zéro, cette valeur étant calibrée notamment en fonction de la vitesse du moteur thermique (4), et du rapport de la transmission du moteur (26) qui est engagé.

3. Procédé de désactivation selon la revendication 1 ou 2, **caractérisé en ce que** la fonction d'agrément curatif (36) est calibrée suivant la durée d'un cycle moteur.

4. Procédé de désactivation selon les revendications 2 et 3, **caractérisé en ce qu'**on divise la valeur de temps par la durée d'un cycle moteur, pour obtenir le nombre de cycles moteur X permettant le passage du facteur de décrément (40) de un à zéro, ce facteur étant alors calculé pour chaque cycle moteur suivant la désactivation, en retranchant 1/X à sa valeur précédente.

5. Véhicule automobile comportant un système de contrôle de la motorisation mettant en oeuvre une fonction d'agrément curatif (36) qui limite lors d'un changement rapide de consigne de couple du moteur (28), les oscillations de vitesse du moteur (12) en générant un couple correctif (6) s'additionnant à cette consigne de couple, **caractérisé en ce qu'**il comporte des moyens mettant en oeuvre un procédé de désactivation de cette fonction d'agrément curatif, réalisé suivant l'une quelconque des revendications précédentes.

6. Véhicule automobile selon la revendication 5, **caractérisé en ce qu'**il comporte des moyens mettant en oeuvre une fonction d'agrément préventif (30) qui filtre une consigne de couple (28) afin de gérer les jeux dans la transmission et les basculements du groupe motopropulseur, cette fonction calculant un couple indiqué (34) après prise en compte du couple de pertes moteur (32), qui est délivré à la fonction d'agrément curatif (36).

7. Véhicule automobile selon la revendication 5 ou 6, **caractérisé en ce que** le procédé de désactivation de la fonction d'agrément curatif (36) est mis en oeuvre par un calculateur de contrôle de la motorisation.

## Patentansprüche

1. Verfahren zur Deaktivierung einer kurativen Fahrfähigkeitsfunktion (36), die auf das Steuern einer Motorisierung eines Kraftfahrzeugs einwirkt, wobei diese Funktion bei einem schnellen Drehmomentsollwertwechsel des Motors (28) die Drehzahlschwingungen des Motors (12) einschränkt, indem ein korrigierendes Drehmoment erzeugt wird, das sich zu diesem Drehmomentsollwert hinzufügt, **dadurch gekennzeichnet, dass** es bei einer Deaktivierungsanfrage der kurativen Fahrfähigkeitsfunktion (36) einen Dekrementierungsfaktor (40), der von eins zu null sinkt, ermittelt, ihn dann mit dem erforderlichen theoretischen korrigierenden Drehmoment multipliziert, das weiter durch diese Funktion normal berechnet wird, um ein korrigierendes Enddrehmoment (42) zu erhalten, das zu dem Drehmomentsollwert (34) hinzugefügt wird.

2. Verfahren zur Deaktivierung nach Anspruch 1, **dadurch gekennzeichnet, dass** ein Zeitwert mit dem Dekrementierungsfaktor (40) assoziiert wird, der die Gesamtdauer des Übergangs von diesem Faktor des Werts eins auf den Wert null darstellt, wobei dieser Wert insbesondere in Abhängigkeit von der Drehzahl der Brennkraftmaschine (4) und dem Gang des Motors (26), der eingerückt ist, kalibriert wird.

3. Verfahren zur Deaktivierung nach Anspruch 1 oder 2, **dadurch gekennzeichnet, dass** die kurative Fahrfähigkeitsfunktion (36) gemäß der Dauer eines Motorzyklus kalibriert wird.

4. Verfahren zur Deaktivierung nach den Ansprüchen 2 und 3, **dadurch gekennzeichnet, dass** der Zeitwert durch die Dauer eines Motorzyklus dividiert wird, um eine Anzahl von Motorzyklen X zu erhalten, die das Übergehen des Dekrementierungsfaktors (40) von eins auf null erlaubt, wobei dieser Faktor daher für jeden Motorzyklus, der auf die Deaktivierung folgt, berechnet wird, indem 1/X von seinem vorhergehenden Wert abgezogen wird.

5. Kraftfahrzeug, das ein Steuersystem der Motorisierung umfasst, das eine kurative Fahrfähigkeitsfunktion (36) umsetzt, die bei einem schnellen Drehmomentsollwertwechsel des Motors (28) die Drehzahlschwingungen des Motors (12) beschränkt, indem ein korrigierendes Drehmoment (6) erzeugt wird, das zu diesem Drehmomentsollwert hinzugefügt wird, **dadurch gekennzeichnet, dass** es Mittel umfasst, die ein Verfahren zur Deaktivierung dieser kurativen Fahrfähigkeitsfunktion umsetzen, das gemäß einem der vorstehenden Ansprüche ausgeführt wird.

6. Kraftfahrzeug nach Anspruch 5, **dadurch gekennzeichnet, dass** es Mittel umfasst, die eine vorbeugende Fahrfähigkeitsfunktion (30) umsetzen, die einen Drehmomentsollwert (28) filtert, um die Spiele in dem Getriebe und Kippen des Motoraggregats zu verwalten, wobei diese Funktion ein angegebenes Drehmoment (34) berechnet, nachdem das Motorverlustdrehmoment (32) berechnet wurde, das zu der kurativen Fahrfähigkeitsfunktion (36) geliefert wird.

7. Kraftfahrzeug nach Anspruch 5 oder 6, **dadurch gekennzeichnet, dass** das Verfahren zur Deaktivierung der kurativen Fahrfähigkeitsfunktion (36) durch einen Steuerrechner der Motorisierung umgesetzt wird.

## Claims

1. A method for deactivating a curative driveability function (36) which acts on the control of a motor vehicle driveline, this function, during a rapid change in engine torque setpoint (28), limiting the engine speed fluctuations (12) by generating a corrective torque that combines with this torque setpoint, **characterized in that**, during a demand to deactivate the curative driveability function (36), it establishes a decrement factor (40) decreasing from one to zero, then it multiplies it by the theoretical corrective torque needed which continues to be calculated in the normal way by this function in order to obtain the final corrective torque (42) which is combined with the torque setpoint (34).

2. The method for deactivating according to Claim 1, **characterized in that** a time value is associated with the decrement factor (40), which represents the total duration of passage from this factor of the value one to the value zero, this value being calibrated in particular as a function of the speed of the combustion engine (4), and of the ratio of the transmission of the engine (26) which is engaged.

3. The method for deactivating according to Claim 1 or 2, **characterized in that** the curative driveability function (36) is calibrated according to the duration of an engine cycle.

4. The method for deactivating according to Claims 2 and 3, **characterized in that** the time value is divided by the duration of an engine cycle in order to obtain the number of engine cycles X permitting the passage of the decrement factor (40) from one to zero, this factor being then calculated for each engine cycle following the deactivation, deducting 1/X at its preceding value.

5. A motor vehicle comprising a system for controlling the driveline, implementing a curative driveability function (36) which, during a rapid change in the engine torque setpoint of the engine (28), limits the engine speed fluctuations (12) by generating a corrective torque (6) that combines with this torque setpoint, **characterized in that** it comprises means implementing a method for deactivating this curative driveability function, realized according to any one of the preceding claims.

6. The motor vehicle according to Claim 5, **characterized in that** it comprises means implementing a preventive driveability function (30) which filters a torque setpoint (28) so as to manage the plays in the transmission and the tipping of the drivetrain, this function calculating an indicated torque (34) after taking into account the torque of engine losses (32), which is delivered to the curative driveability function (36).

7. The motor vehicle according to Claim 5 or 6, **characterized in that** the method for deactivating the curative driveability function (36) is implemented by a driveline control computer.
